# EUROPÄISCHE PATENTSCHRIFT

(11) **EP 2 168 971 B1**
(45) Veröffentlichungstag und Bekanntmachung des Hinweises auf die Patenterteilung: **03.08.2016**
(21) Anmeldenummer: 09178471.0
(22) Anmeldetag: 14.03.2006
(51) Int. Cl.: C07F 19/00, B01D 15/00, C02F 1/00

(54) **Flüssigkeitsabsorption durch metallorganische Gerüstmaterialien**
Fluid absorption by metal-organic frameworks
Absorption de liquide par des matériaux à charpente métallo-organique

(30) Priorität: 16.03.2005 DE 102005012087
(43) Veröffentlichungstag der Anmeldung: 31.03.2010
(62) Teilanmeldung aus: 06111068.0
(73) Patentinhaber: BASF SE, 67056 Ludwigshafen am Rhein (DE)
(72) Erfinder: MÜLLER, Ulrich, 67435, Neustadt (DE); HESSE, Michael, 67549, Worms (DE); PÜTTER, Hermann, 67433, Neustadt (DE)
(74) Vertreter: BASF IP Association

(56) Entgegenhaltungen:
- EP-A- 0 790 253
- WO-A1-82/04271
- CA-A1- 2 231 706
- US-A- 4 011 098
- KITAGAWA S ET AL: "Functional Porous Coordination Polymers" ANGEWANDTE CHEMIE. INTERNATIONAL EDITION, WILEY VCH VERLAG, WEINHEIM, Bd. 43, Nr. 18, 1. Januar 2004 (2004-01-01), Seiten 2334-2375, XP002456418 ISSN: 1433-7851

## Beschreibung

Die vorliegende Erfindung betrifft Verfahren zum absorptiven Aufnehmen von Flüssigkeiten unter Verwendung porösen metallorganischen Gerüstmaterials.

Es werden häufig Feststoffe benötigt, um Flüssigkeiten in oder an sich zu binden, damit gewährleistet ist, dass diese Flüssigkeiten sich nicht weiter ausbreiten, in Kontakt mit anderen Flüssigkeiten oder Feststoffen treten oder die vorgenannten Flüssigkeiten "handhabbar" zu machen.

Hierbei sind beispielhaft Fälle zu nennen, bei denen Flüssigkeiten unbeabsichtigt verschüttet werden, wie dies im Labor geschehen kann. Auch das Fallenlassen von Behältern wie Glasflaschen führt dazu, dass sich Flüssigkeit auf Tischbänken oder dem Fußboden an einen Feststoff gebunden werden muss. Hierbei handelt es sich bei der Flüssigkeit häufig um ein anorganisches oder organisches Lösemittel.

Ein weiterer häufiger Fall, bei dem Flüssigkeiten in oder an Feststoffen aufgenommen werden müssen, um eine Kontamination des Bodens oder der Luft zu vermeiden, tritt bei Verkehrsunfällen auf. Hier müssen austretende Flüssigkeiten, wie Benzin, Motorenöl, Getriebeöl und dergleichen entsprechend behandelt werden.

Weiterhin ist das Aufnehmen von Flüssigkeiten wie Desinfektionsmitteln oder Geruchsstoffen in Feststoffen von Vorteil, da durch den Feststoff die oben erwähnte "Handhabbarkeit" erleichtert und eine kontrollierte Abgabe der Flüssigkeit über die Gasphase an die Umgebung, beispielsweise die Raumluft, durch den Feststoff gesteuert werden kann.

Feststoffe zum Aufnehmen sind im Stand der Technik bekannt. Hierzu zählen beispielsweise Ionenaustauscher und Zeolithe. Ein gängiges Absorbens für Flüssigkeiten ist unter dem Namen Chemizorb® der Fa. Merck erhältlich.

Nachteilig bei den verwendeten Feststoffen in Verfahren zum absorptiven Aufnehmen von Flüssigkeiten ist deren limitiertes Aufnahmevermögen und Quelleigenschaften bei der Aufnahme von Flüssigkeiten.

S. Kitagawa, Angew. Chem. Int. Ed. 2004/43,2334 bezieht sich auf poröse Koordinationspoiymere, beispielsweise das dreidimensionale Netzwerk [(Ni(cyclam)(H₂O)}₃(1,3,5-BTC)₂ · 24 H₂O]ₙ (cyclam = 1,4,8,11 - Tetraazacyclotetradecan). Das Gerüst des Koordinationspolymers enthält in seinen Kanälen Wassermoleküle, welche daraus entfernt werden können. Dabei erfolgt eine Umwandlung der Kristallstruktur, welche durch Eintauchen des Koordinationspolymers in Wasser rückgängig gemacht werden kann.

CA-A 2 231 706 beschreibt supramolekulare metallorganische Verbindungen, weiche in der Lage sein sollen, sich selbst in einer dreidimensionalen Schichtstruktur zu organisieren und reversibel Gast-Moleküle aufzunehmen. Die in CA-A 2 231 706 beschriebenen Verbindungen sollen daher beispielsweise Anwendung als Adsorbens finden, z.B. um aromatische Verbindungen aus einem Wasserzustrom zu entfernen.

Die Dokumente WO 82/04271 und US 4,011,098 zeigen das Verwenden von adsorbierenden Materialien zum Aufnehmen von verschütteten Flüssigkeiten.

Die Aufgabe der vorliegenden Erfindung besteht darin, ein verbessertes Verfahren unter Verwendung eines festen Absorbens bereitzustellen, das zumindest teilweise bessere Eigenschaften gegenüber dem Stand der Technik aufweist.

Die Aufgabe wird gelöst durch ein Verfahren zum absorptiven Aufnehmen von Flüssigkeiten, den Schritt enthaltend

Inkontaktbringen der Flüssigkeit mit mindestens einem Sorbens enthaltend ein poröses metallorganisches Gerüstmaterial (MOF), wobei das Gerüstmaterial die Flüssigkeit aufnimmt und mindestens eine an mindestens ein Metallion koordinativ gebundene, mindestens zweizähnige organische Verbindung enthält, wobei die Flüssigkeit Wasser enthält und wobei sich das Gerüstmaterial in einem für das Gerüstmaterial geschlossenen Behälter befindet, der jedoch für die zu absorbierende Flüssigkeit durchlässig ist.

Es hat sich gezeigt, dass poröse metallorganische Gerüstmaterialien nach der vorliegenden Erfindung vorteilhafte Eigenschaften bei dem absorptiven Aufnehmen von Flüssigkeiten aufweisen.

Vorteilhafterweise handelt es sich bei der Flüssigkeit um Flüssigkeitsabfall, wie oben beschrieben. Weiterhin bevorzugt handelt es sich bei der Flüssigkeit um ein Desinfektionsmittel, einen Geruchsstoff, ein anorganisches oder organisches Lösemittel, Treibstoff - insbesondere Benzin oder Diesel-, Hydraulik-, Kühler-, Bremsflüssigkeit oder ein Öl, insbesondere Maschinenöl.

Ebenso bevorzugt enthält die zu absorbierende Flüssigkeit neben Wasser einen gegebenenfalls halogenierten aliphatischen oder aromatischen, cyclischen oder acyclischen Kohlenwasserstoff oder Mischungen hiervon.

Insbesondere bevorzugt enthält die Flüssigkeit neben Wasser Aceton, Acetonitril, Anilin, Anisol, Benzol, Benzonitril, Brombenzol, Butanol, tert.-Butanol, Chinolin, Chlorbenzol, Chloroform, Cyclohexan, Diethylenglykol, Diethylether, Dimethylacetamid, Dimethylformamid, Dimethylsulfoxid, Dioxan, Eisessig, Essigsäureanhydrid, Essigsäureethylester, Ethanol, Ethylencarbonat, Ethylendichlorid, Ethylenglycol, Ethylenglycoldimethylether, Formamid, Hexan, Isopropanol, Methanol, Methoxypropanol, 3-Methyl-1-butanol, Methylenchlorid, Methylethylketon, N-Methylformamid, N-Methylpyrrolidon, Nitrobenzol, Nitromethan, Piperidin, Propanol, Propylencarbonat, Pyridin, Schwefelkohlenstoff, Sulfolan, Tetrachlorethen, Tetrachlorkohlenstoff, Tetrahydrofuran, Toluol, 1,1,1-Trichlorethan, Trichlorethylen, Triethylamin, Triethylenglycol, Triglyme, oder Mischungen hiervon.

Der MOF kann wie weiter unten näher erläutert in Pulverform oder als Formkörper vorliegen.

Erfindungsgemäß befindet sich der MOF in einem für den MOF geschlossenen Behälter, der jedoch für die zu absorbierende Flüssigkeit durchlässig ist. Dieser kann hierfür Poren oder Öffnungen entsprechender Dimensionen aufweisen.

Dem Fachmann sind zahlreiche weitere Beispiele bekannt, wie das Inkontaktbringen jeweils abhängig von der beabsichtigten Anwendung durchgeführt werden kann.

Ein weiterer Aspekt der vorliegenden Erfindung liegt darin, dass nach der Absorption der Flüssigkeit der MOF dasselbe Volumen wie vor der Absorption aufweisen kann. Es tritt somit durch die Aufnahme der Flüssigkeit insbesondere kein Quellen auf. Dies ist insbesondere ein Vorteil gegenüber Ionenaustauschern.

Ein weiterer Aspekt betrifft insbesondere MOF. bei denen mindestens ein Metallion Cu darstellt. Hier kann vorteilhafterweise eine Sättigung des MOF durch die Flüssigkeit durch eine Farbänderung erkannt werden.

Das poröse metallorganische Gerüstmaterial enthält mindestens eine an mindestens ein Metallion koordinativ gebundene mindestens zweizähnige organische Verbindung. Dieses metallorganische Gerüstmaterial (MOF) wird beispielsweise beschrieben in US 5,548,508, EP-A-0 790 253, M. O-Keeffe et al., J. Sol. State Chem., 152 (2000), Seite 3 bis 20, H. Li et al., Nature 402, (1999), Seite 276, M. Eddaoudi et al., Topics in Catalysis 9, (1999), Seite 105 bis 111, B. Chen et al., Science 291, (2001), Seite 1021 bis 1023 und DE-A-101 11 230.

Die MOF's gemäß der vorliegenden Erfindung enthalten Poren, insbesondere Mirko- und/oder Mesoporen. Mikroporen sind definiert als solche mit einem Durchmesser von 2 nm oder kleiner und Mesoporen sind definiert durch einen Durchmesser im Bereich von 2 bis 50 nm, jeweils entsprechend nach der Definition, wie sie Pure Applied Chem. 45, Seite 71, insbesondere auf Seite 79 (1976) angegeben ist. Die Anwesenheit von Mikro- und/oder Mesoporen kann mit Hilfe von Sorptionsmessungen überprüft werden, wobei diese Messungen die Aufnahmekapazität der MOF für Stickstoff bei 77 Kelvin gemäß DIN 66131 und/oder DIN 66134 bestimmt.

Vorzugsweise beträgt die spezifische Oberfläche - berechnet nach dem Langmuir-Modell gemäß DIN 66135 (DIN 66131, 66134) für ein MOF in Pulverform bei mehr als 5 m²/g, mehr bevorzugt über 10 m²/g, mehr bevorzugt mehr als 50 m²/g, weiter mehr bevorzugt mehr als 500 m²/g, weiter mehr bevorzugt mehr als 1000 m²/g und besonders bevorzugt mehr als 1500 m²/g.

MOF Formkörper können eine niedrigere spezifische Oberfläche besitzen; vorzugsweise jedoch mehr als 10 m²/g, mehr bevorzugt mehr als 50 m²/g, weiter mehr bevorzugt mehr als 500 m²/g.

Die Metallkomponente im Gerüstmaterial nach der vorliegenden Erfindung ist vorzugsweise ausgewählt aus den Gruppen la, IIa, IIa, IVa bis VIIIa und Ib bis Vlb. Besonders bevorzugt sind Mg, Ca, Sr, Ba, Sc, Y, Ti, Zr, Hf, V, Nb, Ta, Cr, Mo, W, Mn, Re, Fe, Ro, Os, Co, Rh, Ir, Ni, Pd, Pt, Cu, Ag, Au, Zn, Cd, Hg, Al, Ga, In, Tl, Si, Ge, Sn, Pb, As, Sb und Bi. Mehr bevorzugt sind Zn, Cu, Ni, Pd, Pt, Ru, Rh und Co. In Bezug auf die Ionen dieser Elemente sind besonders zu erwähnen Mg²⁺, Ca²⁺, Sr²⁺, Ba²⁺, Sc³⁺, Y³⁺, Ti⁴⁺, Zr⁴⁺, Hf⁴⁺, V⁴⁺, V³⁺, V²⁺, Nb³⁺, Ta³⁺, Cr³⁺, Mo³⁺, W³⁺, Mn³⁺, Mn²⁺, Re³⁺, Re²⁺, Fe³⁺, Fe²⁺, Ru³⁺, Ru²⁺, Os³⁺, Os²⁺, Co³⁺, Co²⁺, Rh²⁺, Rh⁺, Ir²⁺, Ir⁺, Ni²⁺, Ni⁺, Pd²⁺, Pd⁺, Pt²⁺, Pt⁺, Cu²⁺, Cu⁺, Ag⁺, Au⁺, Zn²⁺, Cd²⁺, Hg²⁺, Al³⁺, Ga³⁺, In³⁺, Tl³⁺, Si⁴⁺, Si²⁺, Ge⁴⁺, Ge²⁺, Sn⁴⁺, Sn²⁺, Pb⁴⁺, Pb²⁺, As⁵⁺, As³⁺, As⁺, Sb⁵⁺, Sb³⁺, Sb⁺, Bi⁵⁺, Bi³⁺ und Bi⁺.

Der Begriff "mindestens zweizähnige organische Verbindung" bezeichnet eine organische Verbindung, die mindestens eine funktionelle Gruppe enthält, die in der Lage ist, zu einem gegebenen Metallion mindestens zwei, bevorzugt zwei koordinative Bindungen, und/oder zu zwei oder mehr, bevorzugt zwei Metallatomen jeweils eine koordinative Bindung auszubilden.

Als funktionelle Gruppen, über die die genannten koordinativen Bindungen ausgebildet werden kann, sind insbesondere beispielsweise folgende funktionellen Gruppen zu nennen: -CO₂H, -CS₂H, -NO₂, -B(OH)₂, -SO₃H, -Si(OH)₃, -Ge(OH)₃, -Sn(OH)₃, -Si(SH)₄, -Ge(SH)₄, -Sn(SH)₃, -PO₃H, -AsO₃H, -AsO₄H, -P(SH)₃, -As(SH)₃, -CH(RSH)₂, -C(RSH)₃ -CH(RNH₂)₂ -C(RNH₂)₃, -CH(ROH)₂, -C(ROH)₃, -CH(RCN)₂, -C(RCN)₃ wobei R beispielsweise bevorzugt eine Alkylengruppe mit 1, 2, 3, 4 oder 5 Kohlenstoffatomen wie beispielsweise eine Methylen-, Ethylen-, n-Propylen-, i-Propylen, n-Butylen-, i-Butylen-, tert-Butylen- oder n-Pentylengruppe, oder eine Arylgruppe, enthaltend 1 oder 2 aromatische Kerne wie beispielsweise 2 C₆-Ringe, die gegebenenfalls kondensiert sein können und unabhängig voneinander mit mindestes jeweils einem Substituenten geeignet substituiert sein können, und/oder die unabhängig voneinander jeweils mindestens ein Heteroatom wie beispielsweise N, O und/oder S enthalten können. Gemäß ebenfalls bevorzugter Ausführungsformen sind funktionelle Gruppen zu nennen, bei denen der oben genannte Rest R nicht vorhanden ist. Diesbezüglich sind unter anderem -CH(SH)₂, -C(SH)₃, -CH(NH₂)₂, -C(NH₂)₃, -CH(OH)₂, -C(OH)₃, -CH(CN)₂ oder - C(CN)₃ zu nennen.

Die mindestens zwei funktionellen Gruppen können grundsätzlich an jede geeignete organische Verbindung gebunden sein, solange gewährleistet ist, dass die diese funktionellen Gruppen aufweisende organische Verbindung zur Ausbildung der koordinativen Bindung und zur Herstellung des Gerüstmaterials befähigt ist.

Bevorzugt leiten sich die organischen Verbindungen, die die mindestens zwei funktionellen Gruppen enthalten, von einer gesättigten oder ungesättigten aliphatischen Verbindung oder einer aromatischen Verbindung oder einer sowohl aliphatischen als auch aromatischen Verbindung ab.

Die aliphatische Verbindung oder der aliphatische Teil der sowohl aliphatischen als auch aromatischen Verbindung kann linear und/oder verzweigt und/oder cyclisch sein, wobei auch mehrere Cyclen pro Verbindung möglich sind. Weiter bevorzugt enthält die aliphatische Verbindung oder der aliphatische Teil der sowohl aliphatischen als auch aromatischen Verbindung 1 bis 15, weiter bevorzugt 1 bis 14, weiter bevorzugt 1 bis 13, weiter bevorzugt 1 bis 12, weiter bevorzugt 1 bis 11 und insbesondere bevorzugt 1 bis 10C-Atome wie beispielsweise 1, 2, 3, 4, 5, 6, 7, 8, 9 oder 10 C-Atome. Insbesondere bevorzugt sind hierbei unter anderem Methan, Adamantan, Acetylen, Ethylen oder Butadien.

Die aromatische Verbindung oder der aromatische Teil der sowohl aromatischen als auch aliphatischen Verbindung kann einen oder auch mehrere Kerne wie beispielsweise zwei, drei, vier oder fünf Kerne aufweisen, wobei die Kerne getrennt voneinander und/oder mindestens zwei Kerne in kondensierter Form vorliegen können. Besonders bevorzugt weist die aromatische Verbindung oder der aromatische Teil der sowohl aliphatischen als auch aromatischen Verbindung einen, zwei oder drei Kerne auf, wobei einer oder zwei Kerne besonders bevorzugt sind. Unabhängig voneinander kann weiter jeder Kern der genannten Verbindung mindestens ein Heteroatom wie beispielsweise N, O, S, B, P, Si, Al, bevorzugt N, O und/oder S enthalten. Weiter bevorzugt enthält die aromatische Verbindung oder der aromatische Teil der sowohl aromatischen als auch aliphatischen Verbindung einen oder zwei C₆-Kerne, wobei die zwei entweder getrennt voneinander oder in kondensierter Form vorliegen. Insbesondere sind als aromatische Verbindungen Benzol, Naphthalin und/oder Biphenyl und/oder Bipyridyl und/oder Pyridyl zu nennen.

Beispielsweise sind unter anderem trans-Muconsäure oder Fumarsäure oder Phenylenbisacrylsäure zu nennen.

### Beispielsweise sind im Rahmen der vorliegenden Erfindung Dicarbonsäuren wie etwa

Oxalsäure, Bernsteinsäure, Weinsäure, 1,4-Butandicarbonsäure, 4-Oxo-Pyran-2,6-dicarbonsäure, 1,6-Hexandicarbonsäure, Decandicarbonsäure, 1,8-Heptadecandicarbonsäure, 1,9-Heptadecandicarbonsäure, Heptadecandicarbonsäure, Acetylendicarbonsäure, 1,2-Benzoldicarbonsäure, 2,3-Pyridindicarbonsäure, Pyridin-2,3-dicarbonsäure, 1,3-Butadien-1,4-dicarbonsäure, 1,4-Benzoldicarbonsäure, p-Benzoldicarbonsäure, Imidazol-2,4-dicarbonsäure, 2-Methyl-chinolin-3,4-dicarbonsäure, Chinolin-2,4-dicarbonsäure, Chinoxalin-2,3-dicarbonsäure, 6-Chlorchinoxalin-2,3-dicarbonsäure, 4,4'-Diaminphenylmethan-3,3'-dicarbonsäure, Chinolin-3,4-dicarbonsäure, 7-Chlor-4-hydroxychinolin-2,8-dicarbonsäure, Diimiddicarbonsäure, Pyridin-2,6-dicarbonsäure, 2-Methylimidazol-4,5-dicarbonsäure, Thiophen-3,4-dicarbonsäure, 2-Isopropylimidazol-4,5-dicarbonsäure, Tetrahydropyran-4,4-dicarbonsäure, Perylen-3,9-dicarbonsäure, Perylendicarbonsäure, Pluriol E 200-dicarbonsäure, 3,6-Dioxaoctandicarbonsäure, 3,5-Cyclohexadien-1,2-dicarbonsäure, Octadicarbonsäure, Pentan-3,3-carbonsäure, 4,4'-Diamino-1,1'-diphenyl-3,3'-dicarbon-säure, 4,4'-Diaminodiphenyl-3,3'-dicarbonsäure, Benzidin-3,3'-dicarbonsäure, 1,4-bis-(Phenylamino)-benzol-2,5-dicarbonsäure, 1,1'-Di-naphthyl-5,5'-dicarbonsäure, 7-Chlor-8-methylchinolin-2,3-dicarbonsäure, 1-Anilino-anthrachinon-2,4'-dicarbonsäure, Poly-tetrahydrofuran-250-dicarbonsäure, 1,4-bis-(Carboxymethyl)-piperazin-2,3-dicarbonsäure, 7-Chlorchinolin-3,8-dicarbonsäure, 1-(4-Carboxy)-phenyl-3-(4-chlor)-phenyl-pyrazolin-4,5-dicarbonsäure, 1,4,5,6,7,7,-Hexachlor-5-norbornen-2,3-dicarbonsäure, Phenylindan-dicarbonsäure, 1,3-Dibenzyl-2-oxo-imidazolidin-4,5-dicarbonsäure, 1,4-Cyclohexandicarbonsäure, Naphthalin-1,8-dicarbonsäure, 2-Benzoylbenzol-1,3-dicarbonsäure, 1,3-Dibenzyl-2-oxo-imidazolidin-4,5-cis-dicarbonsäure, 2,2'-Bichinolin-4,4'-di-carbonsäure, Pyridin-3,4-dicarbonsäure, 3,6,9-Trioxaundecan-dicarbonsäure, O-Hydroxy-benzophenon-dicarbonsäure, Pluriol E 300-dicarbonsäure, Pluriol E 400-dicarbonsäure, Pluriol E 600-dicarbonsäure, Pyrazol-3,4-dicarbonsäure, 2,3-Pyrazin-dicarbonsäure, 5,6-Dimethyl-2,3-pyrazin-dicarbonsäure, 4,4'-Diaminodiphenylether-di-imiddicarbonsäure, 4,4'-Diaminodiphenyl-methan-diimiddicarbonsäure, 4,4'-Diamino-diphenylsulfon-dümiddicarbonsäure, 2,6-Naphthalindicarbonsäure, 1,3-Adaman-tandicarbonsäure, 1,8-Naphthalindicarbonsäure, 2,3-Naphthalindicarbonsäure, 8-Methoxy-2,3-naphthalindicarbonsäure, 8-Nitro-2,3-naphthalincarbonsäure, 8-Sulfo-2,3-naphthalindicarbonsäure, Anthracen-2,3-dicarbonsäure, 2',3'-Diphenyl-p-terphenyl-4,4"-dicarbonsäure, Diphenylether-4,4'-dicarbonsäure, Imidazol-4,5-dicarbonsäure, 4(1H)-Oxo-thiochromen-2,8-dicarbonsäure, 5-tert-Butyl-1,3-benzoldicarbonsäure, 7,8-Chinolindicarbonsäure, 4,5-Imidazoldicarbonsäure, 4-Cyclohexen-1,2-dicarbonsäure, Hexatriacontandicarbonsäure, Tetradecandicarbonsäure, 1,7-Heptadicarbonsäure, 5-Hydroxy-1,3-Benzoldicarbonsäure, Pyrazin-2,3-dicarbonsäure, Furan-2,5-dicarbonsäure, 1-Nonen-6,9-dicarbonsäure, Eicosendicarbonsäure, 4,4'-Dihydroxy-diphe-nylmethan-3,3'-dicarbonsäure, 1-Amino-4-methyl-9,10-dioxo-9,10-dihydroanthracen-2,3-dicarbonsäure, 2,5-Pyridindicarbonsäure, Cyclohexen-2,3-dicarbonsäure,2,9-Di-chlorfluorubin-4,11-dicarbonsäure, 7-Chlor-3-mtehylchinolin -6,8-dicarbonsäure, 2,4-Dichlorbenzophenon-2',5'-dicarbonsäure, 1,3-benzoldicarbonsäure, 2,6-Pyridin-dicarbonsäure, 1 - Methylpyrrol-3,4-dicarbonsäure, 1-Benzyl-1H-pyrrol-3,4-dicarbonsäure, Anthrachinon-1,5-dicarbonsäure, 3,5-Pyrazoldicarbonsäure, 2-Nitrobenzol-1,4-dicarbonsäure, Heptan-1,7-dicarbonsäure, Cyclobutan-1,1-dicarbonsäure 1,14-Tetra-decandicarbonsäure, 5,6-Dehydronorbornan-2,3-dicarbonsäure oder 5-Ethyl-2,3-Pyri-dindicarbonsäure,
Tricarbonsäuren wie etwa
2-Hydroxy-1,2,3-propantricarbonsäure, 7-Chlor-2,3,8-chinolintricarbonsäure, 1,2,4-Benzoltricarbonsäure, 1,2,4-Butantricarbonsäure, 2-Phosphono-1,2,4-butantricarbonsäure, 1,3,5-Benzoltricarbonsäure, 1-Hydroxy-1,2,3-Propantricarbonsäure, 4,5-Dihydro-4,5-dioxo-1H-pyrrolo[2,3-F]chinolin-2,7,9-tricarbonsäure, 5-Acetyl-3-amino-6-methylbenzol-1,2,4-tricarbonsäure, 3-Amino-5-benzoyl-6-methylbenzol-1,2,4-tricarbonsäure, 1,2,3-Propantricarbonsäure oder Aurintricarbonsäure,
oder Tetracarbonsäuren wie etwa
1,1-Dioxid-perylo[1,12-BCD]thiophen-3,4,9,10-tetracarbonsäure, Perylentetracarbonsäuren wie Perylen-3,4,9,10-tetracarbonsäure oder oder Perylen-1,12-sulfon-3,4,9,10-tetracarbonsäure, Butantetracarbonsäuren wie 1,2,3,4-Butantetracarbonsäure oder Meso-1,2,3,4-Butantetracarbonsäure, Decan-2,4,6,8-tetracarbonsäure, 1,4,7,10,13,16-Hexaoxacyclooctadecan-2,3,11,12-tetracarbonsäure, 1,2,4,5-Benzoltetracarbonsäure, 1,2,11,12-Dodecantetracarbonsäure, 1,2,5,6-Hexan-tetracarbonsäure, 1,2,7,8-Octantetracarbonsäure, 1,4,5,8-Naphthalintetracarbonsäure, 1,2,9,10-Decantetracarbonsäure, Benzophenontetracarbonsäure, 3,3',4,4'-Benzo-phenontetracarbonsäure, Tetrahydrofurantetracarbonsäure oder Cyclopentantetracarbonsäuren wie Cyclopentan-1,2,3,4-tetracarbonsäure
zu nennen.

Ganz besonders bevorzugt werden gegebenenfalls mindestens einfach substituierte mono-, di-, tri-, tetra- oder höherkernige aromatische Di-, Tri- oder Tetracarbonsäuren eingesetzt, wobei jeder der Kerne mindestens ein Heteroatom enthalten kann, wobei zwei oder mehr Kerne gleiche oder unterschiedliche Heteroatome enthalten kann. Beispielsweise bevorzugt werden monokernige Dicarbonsäuren, monokernige Tricarbonsäuren, monokernige Tetracarbonsäuren, dikernige Dicarbonsäuren, dikernige Tricarbonsäuren, dikernige Tetracarbonsäuren, trikernige Dicarbonsäuren, trikernige Tricarbonsäuren, trikernige Tetracarbonsäuren, tetrakernige Dicarbonsäuren, tetrakernige Tricarbonsäuren und/oder tetrakernige Tetracarbonsäuren. Geeignete Heteroatome sind beispielsweise N, O, S, B, P, Si, Al, bevorzugte Heteroatome sind hierbei N, S und/oder O. Als geeigneter Substituent ist diesbezüglich unter anderem -OH, eine Nitrogruppe, eine Aminogruppe oder eine Alkyl- oder Alkoxygruppe zu nennen.

Insbesondere bevorzugt werden als mindestens zweizähnige organische Verbindungen Acetylendicarbonsäure (ADC), Benzoldicarbonsäuren, Naphthalindicarbonsäuren, Biphenyldicarbonsäuren wie beispielsweise 4,4'-Biphenyldicarbonsäure (BPDC), Bipyridindicarbonsäuren wie beispielsweise 2,2'-Bipyridindicarbonsäuren wie beispielsweise 2,2'-Bipyridin-5,5'-dicarbonsäure, Benzoltricarbonsäuren wie beispielsweise 1,2,3-Benzoltricarbonsäure oder 1,3,5-Benzoltricarbonsäure (BTC), Adamantantetracarbonsäure (ATC), Adamantandibenzoat (ADB) Benzoltribenzoat (BTB), Methantetrabenzoat (MTB), Adamantantetrabenzoat oder Dihydroxyterephthalsäuren wie beispielsweise 2,5-Dihydroxyterephthalsäure (DHBDC) eingesetzt.

Ganz besonders bevorzugt werden unter anderem Isophtalsäure, Terephthalsäure, 2,5-Dihydroxyterephthalsäure, 1,2,3-Benzoltricarbonsäure, 1,3,5-Benzoltricarbonsäure, 2,2'-Bipyridin-5,5'-dicarbonsäure oder 2,6-Naphtalindicarbonsäure eingesetzt.

Neben diesen mindestens zweizähnigen organischen Verbindungen kann der MOF auch eine oder mehrere einzähnige Liganden umfassen.

Geeignete Lösemittel zur Herstellung der MOF sind u.a. Ethanol, Dimethylformamid, Toluol, Methanol, Chlorbenzol, Diethylformamid, Dimethylsulfoxid, Wasser, Wasserstoffperoxid, Methylamin, Natronlauge, N-Methylpolidonether, Acetonitril, Benzylchlorid, Triethylamin, Ethylenglykol und Gemische hiervon. Weitere Metallionen, mindestens zweizähnige organische Verbindungen und Lösemittel für die Herstellung von MOF sind u.a. in US-A 5,648,508 oder DE-A 101 11 230 beschrieben.

Die Porengröße des MOF kann durch Wahl des geeigneten Liganden und/oder der mindestens zweizähnigen organischen Verbindung gesteuert werden. Allgemein gilt, dass je größer die organische Verbindung desto größer die Porengröße ist. Vorzugsweise beträgt die Porengröße von 0,2 nm bis 30 nm, besonders bevorzugt liegt die Porengröße im Bereich von 0,3 nm bis 3 nm bezogen auf das kristalline Material.

In einem MOF-Formkörper treten jedoch auch größere Poren auf, deren Größenverteilung variieren kann. Vorzugsweise wird jedoch mehr als 50 % des gesamten Porenvolumens, insbesondere mehr als 75 %, von Poren mit einem Porendurchmesser von bis zu 1000 nm gebildet. Vorzugsweise wird jedoch ein Großteil des Porenvolumens von Poren aus zwei Durchmesserbereichen gebildet. Es ist daher weiter bevorzugt, wenn mehr als 25 % des gesamten Porenvolumens, insbesondere mehr als 50 % des gesamten Porenvolumens von Poren gebildet wird, die in einem Durchmesserbereich von 100 nm bis 800 nm liegen und wenn mehr als 15 % des gesamten Porenvolumens, insbesondere mehr als 25 % des gesamten Porenvolumens von Poren gebildet wird, die in einem Durchmesserbereich von bis zu 10 nm liegen. Die Porenverteilung kann mittels Quecksilber-Porosimetrie bestimmt werden.

Nachfolgend sind Beispiele für MOF's angegeben. Neben der Kennzeichnung des MOF, dem Metall sowie dem mindestens zweizähnigen Liganden ist weiterhin das Lösemittel sowie die Zellenparameter (Winkel α, β und γ sowie die Abstände A, B und C in Å) angegeben. Letztere wurden durch Röntgenbeugung bestimmt.

| **MOF-n** | **Inhaltsstoffe molares Verhältnis M+L** | **Solvens s** | **α** | **β** | **γ** | **a** | **b** | **c** | **Raumgruppe** |
|---|---|---|---|---|---|---|---|---|---|
| MOF-0 | Zn(NO₃)₂·6H₂O | Ethanol | 90 | 90 | 120 | 16.711 | 16.711 | 14.189 | P6(3)/ Mcm |
| | H₃(BTC) | | | | | | | | |
| MOF-2 | Zn(NO₃)₂·6H₂O (0.246 mmol) | DMF Toluen | 90 | 102.8 | 90 | 6.718 | 15.49 | 12.43 | P2(1)/n |
| | H₂(BDC) 0.241 mmol) | | | | | | | | |
| MOF-3 | Zn(NO₃)₂·6H₂O (1.89 mmol) | DMF MeOH | 99.72 | 111.11 | 108.4 | 9.726 | 9.911 | 10.45 | P-1 |
| | H₂(BDC) (1.93mmol) | | | | | | | | |
| MOF-4 | Zn(NO₃)₂·6H₂O (1.00 mmol) | Ethanol | 90 | 90 | 90 | 14.728 | 14.728 | 14.728 | P2(1)3 |
| | H₃(BTC) (0.5 mmol) | | | | | | | | |
| MOF-5 | Zn(NO₃)₂·6H₂O (2.22 mmol) | DMF Chlorbenzen | 90 | 90 | 90 | 25.669 | 25.669 | 25.669 | Fm-3m |
| | H₂(BDC) (2.17 mmol) | | | | | | | | |
| MOF-38 | Zn(NO₃)₂·6H₂O (0.27 mmol) | DMF Chlorbenzen | 90 | 90 | 90 | 20.657 | 20.657 | 17.84 | I4cm |
| | H₃(BTC) (0.15 mmol) | | | | | | | | |
| MOF-31 Zn(ADC)₂ | Zn(NO₃)₂·6H₂O 0.4 mmol | Ethanol | 90 | 90 | 90 | 10.821 | 10.821 | 10.821 | Pn(-3)m |
| | H₂(ADC) 0.8 mmol | | | | | | | | |
| MOF-12 Zn₂(ATC) | Zn(NO₃)₂·6H₂O 0.3 mmol | Ethanol | 90 | 90 | 90 | 15.745 | 16.907 | 18.167 | Pbca |
| | H₄(ATC) 0.15 mmol | | | | | | | | |
| MOF-20 ZnNDC | Zn(NO₃)₂·6H₂O 0.37 mmol | DMF Chlorbenzen | 90 | 92.13 | 90 | 8.13 | 16.444 | 12.807 | P2(1)/c |
| | H₂NDC 0.36 mmol | | | | | | | | |
| MOF-37 | Zn(NO₃)₂·6H₂O 0.2 mmol | DEF Chlorbenzen | 72.38 | 83.16 | 84.33 | 9.952 | 11.576 | 15.556 | P-1 |
| | H₂NDC 0.2 mmol | | | | | | | | |
| MOF-8 Tb₂ (ADC) | Tb(NO₃)₃·5H₂O 0.10 mmol | DMSO MeOH | 90 | 115.7 | 90 | 19.83 | 9.822 | 19.183 | C2/c |
| | H₂ADC 0.20 mmol | | | | | | | | |
| MOF-9 Tb₂ (ADC) | Tb(NO₃)₃·5H₂O 0.08 mmol | DMSO | 90 | 102.09 | 90 | 27.056 | 16.795 | 28.139 | C2/c |
| | H₂ADB 0.12 mmol | | | | | | | | |
| MOF-6 | Tb(NO₃)₃·5H₂O 0.30 mmol | DMF MeOH | 90 | 91.28 | 90 | 17.599 | 19.996 | 10.545 | P21/c |
| | H₂ (BDC) 0.30 mmol | | | | | | | | |
| MOF-7 | Tb(NO₃)₃·5H₂O 0.15 mmol | H₂O | 102.3 | 91.12 | 101.5 | 6.142 | 10.069 | 10.096 | P-1 |
| | H₂(BDC) 0.15 mmol | | | | | | | | |
| MOF-69A | Zn(NO₃)₂·6H₂O 0.083 mmol | DEF H₂O₂ MeNH₂ | 90 | 111.6 | 90 | 23.12 | 20.92 | 12 | C2/c |
| | 4,4'BPDC 0.041 mmol | | | | | | | | |
| MOF-69B | Zn(NO₃)₂·6H₂O 0.083 mmol | DEF H₂O₂ MeNH₂ | 90 | 95.3 | 90 | 20.17 | 18.55 | 12.16 | C2/c |
| | 2,6-NCD 0.041 mmol | | | | | | | | |
| MOF-11 Cu₂(ATC) | Cu(NO₃)₂·2.5H₂O 0.47 mmol | H₂O | 90 | 93.86 | 90 | 12.987 | 11.22 | 11.336 | C2/c |
| | H₂ATC 0.22 mmol | | | | | | | | |
| MOF-11 Cu₂(ATC) dehydr. | | | 90 | 90 | 90 | 8.4671 | 8.4671 | 14.44 | P42/ mmc |
| MOF-14 Cu₃ (BTB) | Cu(NO₃)₂·2.5H₂O 0.28 mmol | H₂O DMF EtOH | 90 | 90 | 90 | 26.946 | 26.946 | 26.946 | Im-3 |
| | H₃BTB 0.052 mmol | | | | | | | | |
| MOF-32 Cd(ATC) | Cd(NO₃)₂·4H₂O 0.24 mmol | H₂O NaOH | 90 | 90 | 90 | 13.468 | 13.468 | 13.468 | P(-4)3m |
| | H₄ATC 0.10 mmol | | | | | | | | |
| MOF-33 Zn₂ (ATB) | ZnCl₂ 0.15 mmol | H₂O DMF EtOH | 90 | 90 | 90 | 19.561 | 15.255 | 23.404 | Imma |
| | H₄ATB 0.02 mmol | | | | | | | | |
| MOF-34 Ni(ATC) | Ni(NO₃)_{2·}6H₂O 0.24 mmol | H₂O NaOH | 90 | 90 | 90 | 10.066 | 11.163 | 19.201 | P2₁2₁2₁ |
| | H₄ATC 0.10 mmol | | | | | | | | |
| MOF-36 Zn₂ (MTB) | Zn(NO₃)₂·4H₂O 0.20 mmol | H₂O DMF | 90 | 90 | 90 | 15.745 | 16.907 | 18.167 | Pbca |
| | H₄MTB 0.04 mmol | | | | | | | | |
| MOF-39 Zn₃O(HBTB) | Zn(NO₃)₂ 4H₂O 0.27 mmol | H₂O DMF EtOH | 90 | 90 | 90 | 17.158 | 21.591 | 25.308 | Pnma |
| | H₃BTB 0.07 mmol | | | | | | | | |
| NO305 | FeCl₂·4H₂O 5,03 mmol) | DMF | 90 | 90 | 120 | 8.2692 | 8.2692 | 63.566 | R-3c |
| | Ameisensre. 86.90 mmol | | | | | | | | |
| NO306A | FeCl₂·4H₂O 5.03 mmol | DEF | 90 | 90 | 90 | 9.9364 | 18.374 | 18.374 | Pbcn |
| | Ameisensre. 86.90 mmol | | | | | | | | |
| NO29 MOF-0 ähnlich | Mn(Ac)₂·4H₂O 0.46 mmol | DMF | 120 | 90 | 90 | 14.16 | 33.521 | 33.521 | P-1 |
| | H₃BTC 0.69 mmol | | | | | | | | |
| BPR48 A2 | Zn(NO₃)₂ 6H₂O 0.012 mmol | DMSO Toluen | 90 | 90 | 90 | 14.5 | 17.04 | 18.02 | Pbca |
| | H₂BDC 0.012 mmol | | | | | | | | |
| BPR69 B1 | Cd(NO₃)₂ 4H₂O 0.0212 mmol | DMSO | 90 | 98.76 | 90 | 14.16 | 15.72 | 17.66 | Cc |
| | H₂BDC 0.0428 mmol | | | | | | | | |
| BPR92 A2 | Co(NO₃)₂·6H₂O 0.018 mmol | NMP | 106.3 | 107.63 | 107.2 | 7.5308 | 10.942 | 11.025 | P1 |
| | H₂BDC 0.018 mmol | | | | | | | | |
| BPR95 C5 | Cd(NO₃)₂ 4H₂O 0.012 mmol | NMP | 90 | 112.8 | 90 | 14.460 | 11.085 | 15.829 | P2(1)/n |
| | H₂BDC 0.36 mmol | | | | | | | | |
| Cu C₆H₄O₆ | Cu(NO₃)₂·2.5H₂O 0.370 mmol | DMF Chlorbenzen | 90 | 105.29 | 90 | 15.259 | 14.816 | 14.13 | P2(1)/c |
| | H₂BDC(OH)₂ 0.37 mmol | | | | | | | | |
| M(BTC) MOF-0 ähnlich | Co(SO₄)H₂O 0.055 mmol | DMF | wie MOF-0 | | | | | | |
| | H₃BTC 0.037 mmol | | | | | | | | |
| Tb(C₆H₄O₆) | Tb(NO₃)₃·5H₂O 0.370 mmol | DMF Chlorbenzen | 104.6 | 107.9 | 97.147 | 10.491 | 10.981 | 12.541 | P-1 |
| | H₂(C₆H₄O₆) 0.56 mmol | | | | | | | | |
| Zn(C₂O₄) | ZnCl₂ 0.370 mmol | DMF Chlorbenzen | 90 | 120 | 90 | 9.4168 | 9.4168 | 8.464 | P(-3)1m |
| | Oxalsäure 0.37 mmol | | | | | | | | |
| Co(CHO) | Co(NO₃)₂·5H₂O 0.043 mmol | DMF | 90 | 91.32 | 90 | 11.328 | 10.049 | 14.854 | P2(1)/n |
| | Ameisensre. 1.60 mmol | | | | | | | | |
| Cd(CHO) | Cd(NO₃)₂·4H₂O 0.185 mmol | DMF | 90 | 120 | 90 | 8.5168 | 8.5168 | 22.674 | R-3c |
| | formic acid 0.185 mmol | | | | | | | | |
| Cu(C₃H₂O₄) | Cu(NO₃)₂·2.5H₂O 0.043 mmol | DMF | 90 | 90 | 90 | 8.366 | 8.366 | 11.919 | P43 |
| | Malonsre. 0.192 mmol | | | | | | | | |
| Zn₆(NDC)₅ MOF-48 | Zn(NO₃)₂·6H₂O 0.097 mmol 14 NDC | DMF Chlorbenzen | 90 | 95.902 | 90 | 19.504 | 16.482 | 14.64 | C2/m |
| | 0.069 mmol | H₂O₂ | | | | | | | |
| MOF-47 | Zn(NO₃)₂ 6H₂O 0.185 mmol | DMF Chlorbenzen H₂O₂ | 90 | 92.55 | 90 | 11.303 | 16.029 | 17.535 | P2(1)/c |
| | H₂(BDC[CH₃]₄) 0.185 mmol | | | | | | | | |
| MO25 | Cu(NO₃)₂·2.5H₂O 0.084 mmol | DMF | 90 | 112.0 | 90 | 23.880 | 16.834 | 18.389 | P2(1)/c |
| | BPhDC 0.085 mmol | | | | | | | | |
| Cu-Thio | Cu(NO₃)₂·2.5H₂O 0.084 mmol | DEF | 90 | 113.6 | 90 | 15.474 7 | 14.514 | 14.032 | P2(1)/c |
| | Thiophen Dicarbonsäure. 0.085 mmol | | | | | | | | |
| CIBDC1 | Cu(NO₃)₂·2.5H₂O0. 084 mmol | DMF | 90 | 105.6 | 90 | 14.911 | 15.622 | 18.413 | C2/c |
| | H₂(BDCCl₂) 0.085 mmol | | | | | | | | |
| MOF-101 | Cu(NO₃)₂·2.5H₂O 0.084 mmol | DMF | 90 | 90 | 90 | 21.607 | 20.607 | 20.073 | Fm3m |
| | BrBDC 0.085 mmol | | | | | | | | |
| Zn₃(BTC)₂ | ZnCl₂ 0.033 mmol | DMF EtOH Base zugegeben | 90 | 90 | 90 | 26.572 | 26.572 | 26.572 | Fm-3m |
| | H₃BTC 0.033 mmol | | | | | | | | |
| MOF-j | Co(CH₃CO₂)₂·4H₂ O (1.65 mmol) | H₂O | 90 | 112.0 | 90 | 17.482 | 12.963 | 6.559 | C2 |
| | H₃(BZC) (0.95 mmol) | | | | | | | | |
| MOF-n | Zn(NO₃)₂·6H₂O H₃ (BTC) | Ethanol | 90 | 90 | 120 | 16.711 | 16.711 | 14.189 | P6(3)/mcm |
| PbBDC | Pb(NO₃)₂ (0.181 mmol) | DMF Ethanol | 90 | 102.7 | 90 | 8.3639 | 17.991 | 9.9617 | P2(1)/n |
| | H₂(BDC) (0.181 mmol) | | | | | | | | |
| Znhex | Zn(NO₃)₂·6H₂O (0.171 mmol) | DMF p-Xylen Ethanol | 90 | 90 | 120 | 37.116 5 | 37.117 | 30.019 | P3(1)c |
| | H₃BTB (0.114 mmol) | | | | | | | | |
| AS16 | FeBr₂ 0.927 mmol | DMF anhydr. | 90 | 90.13 | 90 | 7.2595 | 8.7894 | 19.484 | P2(1)c |
| | H₂(BDC) 0.927 mmol | | | | | | | | |
| AS27-2 | FeBr₂ 0.927 mmol | DMF anhydr. | 90 | 90 | 90 | 26.735 | 26.735 | 26.735 | Fm3m |
| | H₃(BDC) 0.464 mmol | | | | | | | | |
| AS32 | FeCl₃ 1.23 mmol | DMF anhydr. Ethanol | 90 | 90 | 120 | 12.535 | 12.535 | 18.479 | P6(2)c |
| | H₂(BDC) 1.23 mmol | | | | | | | | |
| AS54-3 | FeBr₂ 0.927 | DMF anhydr. n-Propanol | 90 | 109.98 | 90 | 12.019 | 15.286 | 14.399 | C2 |
| | BPDC 0.927 mmol | | | | | | | | |
| AS61-4 | FeBr₂ 0.927 mmol | Pyridin anhydr. | 90 | 90 | 120 | 13.017 | 13.017 | 14.896 | P6(2)c |
| | m-BDC 0.927 mmol | | | | | | | | |
| AS68-7 | FeBr₂ 0.927 mmol | DMF anhydr. Pyridin | 90 | 90 | 90 | 18.340 7 | 10.036 | 18.039 | Pca2₁ |
| | m-BDC 1.204 mmol | | | | | | | | |
| Zn(ADC) | Zn(NO₃)₂·6H₂O 0.37 mmol | DMF Chlorbenzen | 90 | 99.85 | 90 | 16.764 | 9.349 | 9.635 | C2/c |
| | H₂(ADC) 0.36 mmol | | | | | | | | |
| MOF-12 Zn₂ (ATC) | Zn(NO₃)₂·6H₂O 0.30 mmol | Ethanol | 90 | 90 | 90 | 15.745 | 16.907 | 18.167 | Pbca |
| | H₄(ATC) 0.15 mmol | | | | | | | | |
| MOF-20 ZnNDC | Zn(NO₃)₂·6H₂O 0.37 mmol | DMF Chlorbenzen | 90 | 92.13 | 90 | 8.13 | 16.444 | 12.807 | P2(1)/c |
| | H₂NDC 0.36 mmol | | | | | | | | |
| MOF-37 | Zn(NO₃)₂·6H₂O 0.20 mmol | DEF Chlorbenzen | 72.38 | 83.16 | 84.33 | 9.952 | 11.576 | 15.556 | P-1 |
| | H₂NDC 0.20 mmol | | | | | | | | |
| Zn(NDC) (DMSO) | Zn(NO₃)₂·6H₂O H₂NDC | DMSO | 68.08 | 75.33 | 88.31 | 8.631 | 10.207 | 13.114 | P-1 |
| Zn(NDC) | Zn(NO₃)₂·6H₂O H₂NDC | | 90 | 99.2 | 90 | 19.289 | 17.628 | 15.052 | C2/c |
| Zn(HPDC) | Zn(NO₃)₂·4H₂O 0.23 mmol | DMF H₂O | 107.9 | 105.06 | 94.4 | 8.326 | 12.085 | 13.767 | P-1 |
| | H₂(HPDC) 0.05 mmol | | | | | | | | |
| Co(HPDC) | Co(NO₃)₂-6H₂O 0.21 mmol | DMF H₂O/ Ethanol | 90 | 97.69 | 90 | 29.677 | 9.63 | 7.981 | C2/c |
| | H₂ (HPDC) 0.06 mmol | | | | | | | | |
| Zn₃(PDC)2.5 | Zn(NO₃)₂·4H₂O 0.17 mmol | DMF/ ClBz H₂O/ TEA | 79.34 | 80.8 | 85.83 | 8.564 | 14.046 | 26.428 | P-1 |
| | H₂(HPDC) 0.05 mmol | | | | | | | | |
| Cd₂ (TPDC)2 | Cd(NO₃)₂·4H₂O 0.06 mmol | Methanol/ CHP H₂O | 70.59 | 72.75 | 87.14 | 10.102 | 14.412 | 14.964 | P-1 |
| | H₂(HPDC) 0.06 mmol | | | | | | | | |
| Tb(PDC)1.5 | Tb(NO₃)₃·5H₂O 0.21 mmol | DMF H₂O/ Ethanol | 109.8 | 103.61 | 100.14 | 9.829 | 12.11 | 14.628 | P-1 |
| | H₂(PDC) 0.034 mmol | | | | | | | | |
| ZnDBP | Zn(NO₃)₂·6H₂O 0.05 mmol | MeOH | 90 | 93.67 | 90 | 9.254 | 10.762 | 27.93 | P2/n |
| | Dibenzylphosphat 0.10 mmol | | | | | | | | |
| Zn₃(BPDC) | ZnBr₂ 0.021 mmol | DMF | 90 | 102.76 | 90 | 11.49 | 14.79 | 19.18 | P21/n |
| | 4,4'BPDC 0.005 mmol | | | | | | | | |
| CdBDC | Cd(NO₃)₂·4H₂O 0.100 mmol | DMF Na₂SiO ₃ (aq) | 90 | 95.85 | 90 | 11.2 | 11.11 | 16.71 | P21/n |
| | H₂(BDC) 0.401 mmol | | | | | | | | |
| Cd-mBDC | Cd(NO₃)₂·4H₂O 0.009 mmol | DMF MeNH₂ | 90 | 101.1 | 90 | 13.69 | 18.25 | 14.91 | C2/c |
| | H₂(mBDC) 0.018 mmol | | | | | | | | |
| Zn₄OBND C | Zn(NO₃)₂·6H₂O 0.041 mmol | DEF MeNH₂ H₂O₂ | 90 | 90 | 90 | 22.35 | 26.05 | 59.56 | Fmmm |
| | BNDC | | | | | | | | |
| Eu(TCA) | Eu(NO₃)₃·6H₂O 0.14 mmol | DMF Chlorbenzen | 90 | 90 | 90 | 23.325 | 23.325 | 23.325 | Pm-3n |
| | TCA 0.026 mmol | | | | | | | | |
| Tb(TCA) | Tb(NO₃)₃·6H₂O 0.069 mmol | DMF Chlor-benzen | 90 | 90 | 90 | 23.272 | 23.272 | 23.372 | Pm-3n |
| | TCA 0.026 mmol | | | | | | | | |
| Formate | Ce(NO₃)₃·6H₂O 0.138 mmol | H₂O Ethanol | 90 | 90 | 120 | 10.668 | 10.667 | 4.107 | R-3m |
| | Ameisensre. 0.43 mmol | | | | | | | | |
| | FeCl₂·4H₂O 5.03 mmol | DMF | 90 | 90 | 120 | 8.2692 | 8.2692 | 63.566 | R-3c |
| | Ameisensre. 86.90 mmol | | | | | | | | |
| | FeCl₂·4H₂O 5.03 mmol | DEF | 90 | 90 | 90 | 9.9364 | 18.374 | 18.374 | Pbcn |
| | Ameisensre. 86.90 mmol | | | | | | | | |
| | FeCl₂·4H₂O 5.03 mmol | DEF | 90 | 90 | 90 | 8.335 | 8.335 | 13.34 | P-31 c |
| | Ameisensre. 86.90 mmol | | | | | | | | |
| NO330 | FeCl₂·4H₂O 0.50 mmol | Formamid | 90 | 90 | 90 | 8.7749 | 11.655 | 8.3297 | Pnna |
| | Ameisensre. 8.69 mmol | | | | | | | | |
| NO332 | FeCl₂·4H₂O 0.50 mmol | DIP | 90 | 90 | 90 | 10.031 3 | 18.808 | 18.355 | Pbcn |
| | Ameisensre. 8.69 mmol | | | | | | | | |
| NO333 | FeCl₂·4H₂O 0.50 mmol | DBF | 90 | 90 | 90 | 45.275 4 | 23.861 | 12.441 | Cmcm |
| | Ameisensre. 8.69 mmol | | | | | | | | |
| NO335 | FeCl₂·4H₂O 0.50 mmol | CHF | 90 | 91.372 | 90 | 11.596 4 | 10.187 | 14.945 | P21/n |
| | Ameisensre. 8.69 mmol | | | | | | | | |
| NO336 | FeCl₂·4H₂O 0.50 mmol | MFA | 90 | 90 | 90 | 11.794 5 | 48.843 | 8.4136 | Pbcm |
| | Ameisensre. 8.69 mmol | | | | | | | | |
| NO13 | Mn(AC)₂·4H₂O 0.46 mmol | Ethanol | 90 | 90 | 90 | 18.66 | 11.762 | 9.418 | Pbcn |
| | Benzoesre. 0.92 mmol | | | | | | | | |
| | Bipyridin 0.46 mmol | | | | | | | | |
| NO29 MOF-0 ähnlich | Mn(AC)₂·4H₂O 0.46 mmol | DMF | 120 | 90 | 90 | 14.16 | 33.521 | 33.521 | P-1 |
| | H₃BTC 0.69 mmol | | | | | | | | |
| Mn(hfac)₂ (O₂CC₆H₅) | Mn(AC)₂·4H₂O 0.46 mmol | Ether | 90 | 95.32 | 90 | 9.572 | 17.162 | 14.041 | C2/c |
| | Hfac 0.92 mmol | | | | | | | | |
| | Bipyridin 0.46 mmol | | | | | | | | |
| BPR43G2 | Zn(NO₃)₂·6H₂O 0.0288 mmol | DMF CH₃CN | 90 | 91.37 | 90 | 17.96 | 6.38 | 7.19 | C2/c |
| | H₂BDC 0.0072 mmol | | | | | | | | |
| BPR48A2 | Zn(NO₃)₂ 6H₂O 0.012 mmol | DMSO Toluen | 90 | 90 | 90 | 14.5 | 17.04 | 18.02 | Pbca |
| | H₂BDC 0.012 mmol | | | | | | | | |
| BPR49B1 | Zn(NO₃)₂ 6H₂O 0.024 mmol | DMSO Methanol | 90 | 91.172 | 90 | 33.181 | 9.824 | 17.884 | C2/c |
| | H₂BDC 0.048 mmol | | | | | | | | |
| BPR56E1 | Zn(N0₃)₂ 6H₂O 0.012 mmol | DMSO n-Propanol | 90 | 90.096 | 90 | 14.587 3 | 14.153 | 17.183 | P2(1)/n |
| | H₂BDC 0.024 mmol | | | | | | | | |
| BPR68D10 | Zn(NO₃)₂ 6H₂O 0.0016 mmol | DMSO Benzen | 90 | 95.316 | 90 | 10.062 7 | 10.17 | 16.413 | P2(1)/c |
| | H₃BTC 0.0064 mmol | | | | | | | | |
| BPR69B1 | Cd(NO₃)₂ 4H₂O 0.0212 mmol | DMSO | 90 | 98.76 | 90 | 14.16 | 15.72 | 17.66 | Cc |
| | H₂BDC 0.0428 mmol | | | | | | | | |
| BPR73E4 | Cd(NO₃)₂ 4H₂O 0.006 mmol | DMSO Toluen | 90 | 92.324 | 90 | 8.7231 | 7.0568 | 18.438 | P2(1)/n |
| | H₂BDC 0.003 mmol | | | | | | | | |
| BPR76D5 | Zn(NO₃)₂ 6H₂O 0.0009 mmol | DMSO | 90 | 104.17 | 90 | 14.419 1 | 6.2599 | 7.0611 | Pc |
| | H₂BzPDC 0.0036 mmol | | | | | | | | |
| BPR80B5 | Cd(NO₃)₂·4H₂O 0.018 mmol | DMF | 90 | 115.11 | 90 | 28.049 | 9.184 | 17.837 | C2/c |
| | H₂BDC 0.036 mmol | | | | | | | | |
| BPR80H5 | Cd(NO₃)₂ 4H₂O 0.027 mmol | DMF | 90 | 119.06 | 90 | 11.474 6 | 6.2151 | 17.268 | P2/c |
| | H₂BDC 0.027 mmol | | | | | | | | |
| BPR82C6 | Cd(NO₃)₂ 4H₂O 0.0068 mmol | DMF | 90 | 90 | 90 | 9.7721 | 21.142 | 27.77 | Fdd2 |
| | H₂BDC 0.202 mmol | | | | | | | | |
| BPR86C3 | Co(NO₃)₂ 6H₂O 0.0025 mmol | DMF | 90 | 90 | 90 | 18.344 9 | 10.031 | 17.983 | Pca2(1) |
| | H₂BDC 0.075 mmol | | | | | | | | |
| BPR86H6 | Cd(NO₃)₂·6H₂O 0.010 mmol | DMF | 80.98 | 89.69 | 83.41 2 | 9.8752 | 10.263 | 15.362 | P-1 |
| | H₂BDC 0.010 mmol | | | | | | | | |
| | Co(NO₃)₂ 6H₂O | NMP | 106.3 | 107.63 | 107.2 | 7.5308 | 10.942 | 11.025 | P1 |
| BPR95A2 | Zn(NO₃)₂ 6H₂O 0.012 mmol | NMP | 90 | 102.9 | 90 | 7.4502 | 13.767 | 12.713 | P2(1)/c |
| | H₂BDC 0.012 mmol | | | | | | | | |
| CuCeF₄O₄ | Cu(NO₃)₂·2.5H₂O 0.370 mmol | DMF Chlorbenzen | 90 | 98.834 | 90 | 10.967 5 | 24.43 | 22.553 | P2(1)/n |
| | H₂BDC(OH)₂ 0.37 mmol | | | | | | | | |
| Fe Formic | FeCl₂·4H₂O 0.370 mmol | DMF | 90 | 91.543 | 90 | 11.495 | 9.963 | 14.48 | P2(1)/n |
| | Ameisensre. 0.37 mmol | | | | | | | | |
| Mg Formic | Mg(NO₃)₂·6H₂O 0.370 mmol | DMF | 90 | 91.359 | 90 | 11.383 | 9.932 | 14.656 | P2(1)/n |
| | Ameisensre. 0.37 mmol | | | | | | | | |
| MgC₆H₄O₆ | Mg(NO₃)₂·6H₂O 0.370 mmol | DMF | 90 | 96.624 | 90 | 17.245 | 9.943 | 9.273 | C2/c |
| | H₂BDC(OH)₂ 0.37 mmol | | | | | | | | |
| Zn C₂H₄BDC MOF-38 | ZnCl₂ 0.44 mmol | DMF | 90 | 94.714 | 90 | 7.3386 | 16.834 | 12.52 | P2(1)/n |
| | CBBDC 0.261 mmol | | | | | | | | |
| MOF-49 | ZnCl₂ 0.44 mmol | DMF CH₃CN | 90 | 93.459 | 90 | 13.509 | 11.984 | 27.039 | P2/c |
| | m-BDC 0.261 mmol | | | | | | | | |
| MOF-26 | Cu(NO₃)₂·5H₂O 0.084 mmol | DMF | 90 | 95.607 | 90 | 20.879 7 | 16.017 | 26.176 | P2(1)/n |
| | DCPE 0.085 mmol | | | | | | | | |
| MOF-112 | Cu(NO₃)₂·2.5H₂O 0.084 mmol | DMF Ethanol | 90 | 107.49 | 90 | 29.324 1 | 21.297 | 18.069 | C2/c |
| | o-Br-m-BDC 0.085 mmol | | | | | | | | |
| MOF-109 | Cu(NO₃)₂·2.5H₂O 0.084 mmol | DMF | 90 | 111.98 | 90 | 23.880 1 | 16.834 | 18.389 | P2(1)/c |
| | KDB 0.085 mmol | | | | | | | | |
| MOF-111 | Cu(NO₃)₂·2.5H₂O 0.084 mmol | DMF Ethanol | 90 | 102.16 | 90 | 10.676 7 | 18.781 | 21.052 | C2/c |
| | o-BrBDC 0.085 mmol | | | | | | | | |
| MOF-110 | Cu(NO₃)₂·2.5H₂O 0.084 mmol | DMF | 90 | 90 | 120 | 20.065 2 | 20.065 | 20.747 | R-3/m |
| | Thiophen | | | | | | | | |
| | Dicarbonsre. 0.085 mmol | | | | | | | | |
| MOF-107 | Cu(NO₃)₂·2.5H₂O 0.084 mmol | DEF | 104.8 | 97.075 | 95.20 6 | 11.032 | 18.067 | 18.452 | P-1 |
| | Thiophen Dicarbonsre. 0.085 mmol | | | | | | | | |
| MOF-108 | Cu(NO₃)₂·2.5H₂O 0.084 mmol | DBF/ Methanol | 90 | 113.63 | 90 | 15.474 7 | 14.514 | 14.032 | C2/c |
| | Thiophen Dicarbonsre. 0.085 mmol | | | | | | | | |
| MOF-102 | Cu(NO₃)₂·2.5H₂O 0.084 mmol | DMF | 91.63 | 106.24 | 112.0 1 | 9.3845 | 10.794 | 10.831 | P-1 |
| | H₂(BDCCl₂) 0.085 mmol | | | | | | | | |
| Clbdc1 | Cu(NO₃)₂·2.5H₂O 0.084 mmol | DEF | 90 | 105.56 | 90 | 14.911 | 15.622 | 18.413 | P-1 |
| | H₂(BDCCl₂) 0.085 mmol | | | | | | | | |
| Cu(NMOP) | Cu(NO₃)₂·2.5H₂O 0.084 mmol | DMF | 90 | 102.37 | 90 | 14.923 8 | 18.727 | 15.529 | P2(1)/m |
| | NBDC 0.085 mmol | | | | | | | | |
| Tb(BTC) | Tb(NO₃)₃·5H₂O 0.033 mmol | DMF | 90 | 106.02 | 90 | 18.698 6 | 11.368 | 19.721 | |
| | H₃BTC 0.033 mmol | | | | | | | | |
| Zn₃(BTC)₂ Honk | ZnCl₂ 0.033 mmol | DMF Ethanol | 90 | 90 | 90 | 26.572 | 26.572 | 26.572 | Fm-3m |
| | H₃BTC 0.033 mmol | | | | | | | | |
| Zn₄O(NDC) | Zn(NO₃)₂·4H₂O 0.066 mmol | DMF Ethanol | 90 | 90 | 90 | 41.559 4 | 18.818 | 17.574 | aba2 |
| | 14NDC 0.066 mmol | | | | | | | | |
| CdTDC | Cd(NO₃)₂·4H₂O 0.014 mmol | DMF H₂O | 90 | 90 | 90 | 12.173 | 10.485 | 7.33 | Pmma |
| | Thiophen 0.040 mmol | | | | | | | | |
| | DABCO 0.020 mmol | | | | | | | | |
| IRMOF-2 | Zn(NO₃)₂·4H₂O 0.160 mmol | DEF | 90 | 90 | 90 | 25.772 | 25.772 | 25.772 | Fm-3m |
| | o-Br-BDC 0.60 mmol | | | | | | | | |
| IRMOF-3 | Zn(NO₃)₂·4H₂O 0.20 mmol | DEF Ethanol | 90 | 90 | 90 | 25.747 | 25.747 | 25.747 | Fm-3m |
| | H₂N-BDC 0.60 mmol | | | | | | | | |
| IRMOF-4 | Zn(NO₃)₂·4H₂O 0.11 mmol | DEF | 90 | 90 | 90 | 25.849 | 25.849 | 25.849 | Fm-3m |
| | [C₃H₇O]₂-BDC 0.48 mmol | | | | | | | | |
| IRMOF-5 | Zn(NO₃)₂·4H₂O 0.13 mmol | DEF | 90 | 90 | 90 | 12.882 | 12.882 | 12.882 | Pm-3m |
| | [C₅H₁₁O]₂-BDC 0.50 mmol | | | | | | | | |
| IRMOF-6 | Zn(NO₃)₂·4H₂O 0.20 mmol | DEF | 90 | 90 | 90 | 25.842 | 25.842 | 25.842 | Fm-3m |
| | [C₂H₄]-BDC 0.60 mmol | | | | | | | | |
| IRMOF-7 | Zn(NO₃)₂·4H₂O 0.07 mmol | DEF | 90 | 90 | 90 | 12.914 | 12.914 | 12.914 | Pm-3m |
| | 1,4NBDC 0.20 mmol | | | | | | | | |
| IRMOF-8 | Zn(NO₃)₂·4H₂O 0.55 mmol | DEF | 90 | 90 | 90 | 30.092 | 30.092 | 30.092 | Fm-3m |
| | 2,6NDC 0.42 mmol | | | | | | | | |
| IRMOF-9 | Zn(NO₃)₂·4H₂O 0.05 mmol | DEF | 90 | 90 | 90 | 17.147 | 23.322 | 25.255 | Pnnm |
| | BPDC 0.42 mmol | | | | | | | | |
| IRMOF-10 | Zn(NO₃)₂·4H₂O 0.02 mmol | DEF | 90 | 90 | 90 | 34.281 | 34.281 | 34.281 | Fm-3m |
| | BPDC 0.012 mmol | | | | | | | | |
| IRMOF-11 | Zn(NO₃)₂·4H₂O 0.05 mmol | DEF | 90 | 90 | 90 | 24.822 | 24.822 | 56.734 | R-3m |
| | HPDC 0.20 mmol | | | | | | | | |
| IRMOF-12 | Zn(NO₃)₂·4H₂O 0.017 mmol | DEF | 90 | 90 | 90 | 34.281 | 34.281 | 34.281 | Fm-3m |
| | HPDC 0.12 mmol | | | | | | | | |
| IRMOF-13 | Zn(NO₃)₂·4H₂O 0.048 mmol | DEF | 90 | 90 | 90 | 24.822 | 24.822 | 56.734 | R-3m |
| | PDC 0.31 mmol | | | | | | | | |
| IRMOF-14 | Zn(NO₃)₂·4H₂O 0.17 mmol | DEF | 90 | 90 | 90 | 34.381 | 34.381 | 34.381 | Fm-3m |
| | PDC 0.12 mmol | | | | | | | | |
| IRMOF-15 | Zn(NO₃)₂·4H₂O 0.063 mmol | DEF | 90 | 90 | 90 | 21.459 | 21.459 | 21.459 | Im-3m |
| | TPDC 0.025 mmol | | | | | | | | |
| IRMOF-16 | Zn(NO₃)₂·4H₂O 0.0126 mmol | DEF NMP | 90 | 90 | 90 | 21.49 | 21.49 | 21.49 | Pm-3m |
| | TPDC 0.05 mmol | | | | | | | | |

- ADC: Acetylenedicarbonsäure
- NDC: Naphtalindicarbonsäure
- BDC: Benzoldicarbonsäure
- ATC: Adamantantetracarbonsäure
- BTC: Benzoltricarbonsäure
- BTB: Benzoltribenzoesäure

- MTB: Methantetrabenzoesäure
- ATB: Adamantantetrabenzoesäure

Weitere MOF sind MOF-177 und MOF-178, welche in der Literatur beschrieben sind.

Insbesondere bevorzugt ist ein poröses metallorganisches Gerüstmaterial, bei dem Zn oder Cu als Metallion und die mindestens zweizähnige organische Verbindungen Terephthalsäure, Isophthalsäure, 2,6-Naphthalindicarbonsäure oder 1,3,5-Benzoltricarbonsäure ist.

Neben der konventionellen Methode zur Herstellung der MOF, wie sie beispielsweise in US 5,648,508 beschrieben ist, können diese auch auf elektrochemischem Wege hergestellt werden. Diesbezüglich wird auf DE-A 103 55 087 sowie WO-A 2005/049892 verwiesen. Die auf diesem Weg hergestellten MOFs weisen besonders gute Eigenschaften in Zusammenhang mit der Adsorption und Desorption von chemischen Stoffen, insbesondere von Gasen. Sie unterscheiden sich somit von denen, die konventionell hergestellt werden, auch wenn diese aus den gleichen organischen und Metallionenbestandteilen gebildet werden und sind daher als neue Gerüstmaterialien zu betrachten. Im Rahmen der vorliegenden Erfindung sind elektrochemisch hergestellte MOFs besonders bevorzugt.

In einer bevorzugten Ausführungsform betrifft die Erfindung daher ein Verfahren, wobei dem Inkontaktbringen ein Schritt vorausgeht, bei dem das poröse metallorganische Gerüstmaterial auf elektrochemischem Wege hergestellt wird.

Demgemäß betrifft die elektrochemische Herstellung ein kristallines poröses metallorganischen Gerüstmaterial, enthaltend mindestens eine an mindestens ein Metallion koordinativ gebundene, mindestens zweizähnige organische Verbindung, welches in einem Reaktionsmedium erhalten wird, enthaltend die mindestens eine zweizähnige organische Verbindung, wobei mindestens ein Metallion durch Oxidation mindestens einer das entsprechende Metall enthaltenden Anode erzeugt wird.

Der Begriff "elektrochemische Herstellung" bezeichnet ein Herstellverfahren, bei dem die Bildung mindestens eines Reaktionsproduktes mit der Wanderung von elektrischen Ladungen oder dem Auftreten von elektrischen Potentialen verbunden ist.

Der Begriff "mindestens ein Metallion", wie er im Zusammenhang mit der elektrochemischen Herstellung verwendet wird, bezeichnet Ausführungsformen, gemäß denen mindestens ein Ion eines Metalls oder mindestens ein Ion eines ersten Metalls und mindestens ein Ion mindestens eines vom ersten Metall verschiedenen zweiten Metalls durch anodische Oxidation bereitgestellt werden.

Demgemäß umfasst die elektrochemische Herstellung Ausführungsformen, in denen mindestens ein Ion mindestens eines Metalls durch anodische Oxidation und mindestens ein Ion mindestens eines Metalls über ein Metallsalz bereit gestellt werden, wobei das mindestens eine Metall im Metallsalz und das mindestens eine Metall, das über anodische Oxidation als Metallion bereit gestellt werden, gleich oder voneinander verschieden sein können. Daher umfasst die vorliegende Erfindung in Bezug auf elektrochemisch hergestellte MOF beispielsweise eine Ausführungsform, gemäß der das Reaktionsmedium ein oder mehrere unterschiedliche Salze eines Metalls enthält und das in diesem Salz oder in diesen Salzen enthaltene Metallion zusätzlich durch anodische Oxidation mindestens einer dieses Metall enthaltenden Anode bereitgestellt wird. Ebenso kann das Reaktionsmedium ein oder mehrere unterschiedliche Salze mindestens eines Metalls enthalten und mindestens ein von diesen Metallen unterschiedliches Metall kann über anodische Oxidation als Metallion im Reaktionsmedium bereitgestellt werden.

Gemäß einer bevorzugten Ausführungsform der vorliegenden Erfindung im Zusammenhang mit der elektrochemischen Herstellung wird das mindestens eine Metallion durch anodische Oxidation mindestens einer der dieses mindestens eine Metall enthaltenden Anode bereitgestellt, wobei kein weiteres Metall über ein Metallsalz bereitgestellt wird.

Der Begriff "Metall", wie er im Rahmen der vorliegenden Erfindung im Zusammenhang mit der elektrochemischen Herstellung von MOFs verwendet wird, umfasst sämtliche Elemente des Periodensystems, die über anodische Oxidation auf elektrochemischem Weg in einem Reaktionsmedium bereitgestellt werden können und mit mindestens einer mindestens zweizähnigen organischen Verbindungen mindestens ein metallorganisches poröses Gerüstmaterial zu bilden in der Lage sind.

Unabhängig von dessen Herstellung fällt das erhaltene MOF in pulverförmiger bzw. kristalliner Form an. Dieses kann als solches als Sorbens im erfindungsgemäßen Verfahren alleine oder zusammen mit anderen Sorbentien oder weiteren Materialien eingesetzt werden. Vorzugsweise geschieht dies als Schüttgut, insbesondere in einem Festbett. Weiterhin kann das MOF in einen Formkörper umgewandelt werden. Bevorzugte Verfahren sind hierbei die Verstrangung oder Tablettierung. Bei der Formkörperherstellung können zum MOF weiterer Materialien, wie beispielsweise Binder, Gleitmittel oder andere Additive hinzugesetzt werden. Ebenso ist es denkbar, dass Mischungen von MOF und anderen Adsorbentien beispielsweise Aktivkohle als Formkörper hergestellt werden oder getrennt Formkörper ergeben, die dann als Formkörpermischungen eingesetzt werden.

Hinsichtlich der möglichen Geometrien dieser MOF Formkörper existieren im Wesentlichen keine Beschränkungen. Beispielsweise sind unter anderem Pellets wie beispielsweise scheibenförmige Pellets, Pillen, Kugeln, Granulat, Extrudate wie beispielsweise Stränge, Waben, Gitter oder Hohlkörper zu nennen.

Zur Herstellung dieser Formkörper sind grundsätzlich sämtliche geeigneten Verfahren möglich. Es sind insbesondere folgende Verfahrensführungen bevorzugt:
- Kneten des Gerüstmaterials allein oder zusammen mit mindestens einem Bindemittel und/oder mindestens einem Anteigungsmittel und/oder mindestens einer Templatverbindung unter Erhalt eines Gemisches; Verformen des erhaltenen Gemisches mittels mindestens einer geeigneten Methode wie beispielsweise Extrudieren; Optional Waschen und/oder Trocknen und/oder Calcinieren des Extrudates; Optional Konfektionieren.
- Aufbringen des Gerüstmaterials auf mindestens ein gegebenenfalls poröses Trägermaterial. Das erhaltene Material kann dann gemäß der vorstehend beschriebenen Methode zu einem Formkörper weiterverarbeitet werden.
- Aufbringen des Gerüstmaterials auf mindestens ein gegebenenfalls poröses Substrat.

Kneten und Verformen kann gemäß jedes geeigneten Verfahrens erfolgen, wie beispielsweise in Ullmanns Enzyklopädie der Technischen Chemie, 4. Auflage, Band 2, S. 313 ff. (1972) beschrieben, deren diesbezüglicher Inhalt durch Bezugnahme in den Kontext der vorliegenden Anmeldung vollumfänglich einbezogen wird.

Beispielsweise bevorzugt kann das Kneten und/oder Verformen mittels einer Kolbenpresse, Walzenpresse in Anwesenheit oder Abwesenheit mindestens eines Bindermaterials, Compoundieren, Pelletieren, Tablettieren, Extrudieren, Co-Extrudieren, Verschäumen, Verspinnen, Beschichten, Granulieren, bevorzugt Sprühgranulieren, Versprühen, Sprühtrocknen oder einer Kombination aus zwei oder mehr dieser Methoden erfolgen.

Ganz besonders werden Pellets und/oder Tabletten hergestellt.

Das Kneten und/oder Verformen kann bei erhöhten Temperaturen wie beispielsweise im Bereich von Raumtemperatur bis 300 °C und/oder bei erhöhtem Druck wie beispielsweise im Bereich von Normaldruck bis hin zu einigen hundert bar und/oder in einer Schutzgasatmosphäre wie beispielsweise in Anwesenheit mindestens eines Edelgases, Stickstoff oder einem Gemisch aus zwei oder mehr davon erfolgen.

Das Kneten und/oder Verformen wird gemäß einer weiteren Ausführungsform unter Zugabe mindestens eines Bindemittels durchgeführt, wobei als Bindemittel grundsätzlich jede chemische Verbindung eingesetzt werden kann, die die zum Kneten und/oder Verformen gewünschte Viskosität der zu verknetenden und/oder verformenden Masse gewährleistet. Demgemäß können Bindemittel im Sinne der vorliegenden Erfindung sowohl Viskositätserhöhende als auch Viskositätserniedrigende Verbindungen sein.

Als unter anderem bevorzugte Bindemittel sind beispielsweise Aluminiumoxid oder Aluminiumoxid enthaltende Binder, wie sie beispielsweise in der WO 94/29408 beschrieben sind, Siliciumdioxid, wie es beispielsweise in der EP 0 592 050 A1 beschrieben ist, Mischungen ais Siliciumdioxid und Aluminiumoxid, wie sie beispielsweise in der WO 94/13584 beschrieben sind, Tonminerale, wie sie beispielsweise in der JP 03-037156 A beschrieben sind, beispielsweise Montmorillonit, Kaolin, Bentonit, Hallosit, Dickit, Nacrit und Anauxit, Alkoxysilane, wie sie beispielsweise in der EP 0 102 544 B1 beschrieben sind, beispielsweise Tetraalkoxysilane wie beispielsweise Tetramethoxysilan, Tetraethoxysilan, Tetrapropoxysilan, Tetrabutoxysilan, oder beispielsweise Trialkoxysilane wie beispielsweise Trimethoxysilan, Triethoxysilan, Tripropoxysilan, Tributoxysilan, Alkoxytitanate, beispielsweise Tetraalkoxytitanate wie beispielsweise Tetramethoxytitanat, Tetraethoxytitanat, Tetrapropoxytitanat, Tetrabutoxytitanat, oder beispielsweise Trialkoxytitanate wie beispielsweise Trimethoxytitanat, Triethoxytitanat, Tripropoxytitanat, Tributoxytitanat, Alkoxyzirkonate, beispielsweise Tetraalkoxyzirkonate wie beispielsweise Tetramethoxyzirkonat, Tetraethoxyzirkonat, Tetrapropoxyzirkonat, Tetrabutoxyzirkonat, oder beispielsweise Trialkoxyzirkonate wie beispielsweise Trimethoxyzirkonat, Triethoxyzirkonat, Tripropoxyzirkonat, Tributoxyzirkonat, Silikasole, amphiphile Substanzen und/oder Graphite zu nennen. Insbesondere bevorzugt ist Graphit.

Als viskositätssteigernde Verbindung kann beispielsweise auch, gegebenenfalls zusätzlich zu den oben genannten Verbindungen, eine organische Verbindung und/oder ein hydrophiles Polymer wie beispielsweise Cellulose oder ein Cellulosederivat wie beispielsweise Methylcellulose und/oder ein Polyacrylat und/oder ein Polymethacrylat und/oder ein Polyvinylalkohol und/oder ein Polyvinylpyrrolidon und/oder ein Polyisobuten und/oder ein Polytetrahydrofuran eingesetzt werden.

Als Anteigungsmittel kann unter anderem bevorzugt Wasser oder mindestens ein Alkohol wie beispielsweise ein Monoalkohol mit 1 bis 4C-Atomen wie beispielsweise Methanol, Ethanol, n-Propanol, iso-Propanol, 1-Butanol, 2-Butanol, 2-Methyl-1-propanol oder 2-Methyl-2-propanol oder ein Gemisch aus Wasser und mindestens einem der genannten Alkohole oder ein mehrwertiger Alkohol wie beispielsweise ein Glykol, bevorzugt ein wassermischbarer mehrwertiger Alkohol, allein oder als Gemisch mit Wasser und/oder mindestens einem der genannten einwertigen Alkohole eingesetzt werden.

Weitere Additive, die zum Kneten und/oder Verformen eingesetzt werden können, sind unter anderem Amine oder Aminderivate wie beispielsweise Tetraalkylammonium-Verbindungen oder Aminoalkohole und Carbonat enthaltende Verbindungen wie etwa Calciumcarbonat. Solche weiteren Additive sind etwa in der EP 0 389 041 A1, der EP 0 200 260 A1 oder der WO 95/19222 beschrieben.

Die Reihenfolge der Additive wie Templatverbindung, Binder, Anteigungsmittel, viskositätssteigernde Substanz beim Verformen und Kneten ist grundsätzlich nicht kritisch.

Gemäß einer weiteren bevorzugten Ausführungsform wird der gemäß Kneten und/oder Verformen erhaltene Formkörper mindestens einer Trocknung unterzogen, die im Allgemeinen bei einer Temperatur im Bereich von 25 bis 300 °C, bevorzugt im Bereich von 50 bis 300 °C und besonders bevorzugt im Bereich von 100 bis 300 °C durchgeführt wird. Ebenso ist es möglich, im Vakuum oder unter Schutzgasatmosphäre oder durch Sprühtrocknung zu trocknen.
Gemäß einer besonders bevorzugten Ausführungsform wird im Rahmen dieses Trocknungsvorgangs mindestens eine der als Additive zugesetzten Verbindungen zumindest teilweise aus dem Formkörper entfernt.

Ein weiterer Gegenstand der Erfindung ist die Verwendung eines porösen metallorganischen Gerüstmaterials, welches mindestens eine an mindestens ein Metallion koordinativ gebundene, mindestens zweizähnige organische Verbindung enthält, zum absorptiven Aufnehmen von Wasser, wobei sich das Gerüstmaterial in einem für das Gerüstmaterial geschlossenen Behälter befindet, der jedoch für Wasser durchlässig ist.

Die vorliegende Erfindung soll anhand des nachfolgenden Beispiels näher erläutert werden.

### Beispiele

### Beispiel 1 (nicht erfindungsgemäß)

In ein Schnappdeckelglas werden ein Rührfisch und ein MOF Pulver gegeben. In dieses Glas tropft man Toluol bis das Pulver verklumpt. Die Menge an Toluol, die bis zum Verklumpen aufgenommen wurde, ist in der nachfolgenden Tabelle aufgelistet.

Als MOF Materialien werden das auf elektrochemischem mit Benzol-1,3,5-tricarbonsäure (1,3,5-BTC) hergestellte Cu-MOF und IR-MOF-8 eingesetzt. Cu-MOF kann wie in WO-A 2005/049892 angegeben auf elektrochemischem Wege hergestellt werden. IR-MOF-8 ist in WO-A 02/088148 beschrieben.

| | Menge MOF (g) | Menge Toluol (g) | Aufnahme Toluol (%) |
|---|---|---|---|
| Cu-MOF | 0,530 | 0,764 | 144 |
| | 0,572 | 0,818 | 143 |
| | 0,528 | 0,768 | 145 |
| IR-MOF-8 | 0,564 | 0,710 | 125 |
| | 0,580 | 0,758 | 130 |
| | 0,433 | 0,525 | 121 |

### Beispiel 2 (Wasseraufnahme nach Fisher-Mottlau) (nicht erfindungsgemäß)

In Analogie zu Beispiel 1 wird Wasser zu einem Al-MOF (Terephthalsäure) und einem elektrochemisch hergestellten Cu-Isophthalsäure-MOF Material zugetropft. Die Menge an Wasser, die bis zum Verklumpen aufgenommen wurde, ist in der nachfolgenden Tabelle aufgelistet.

| | g Wasser / g MOF Pulver | g Wasser / ml Pulver |
|---|---|---|
| Al-MOF | 1,21 | 0,295 |
| Cu-Isophth.-MOF | 1,37 | 0,213 |

## Patentansprüche

1. Verfahren zum absorptiven Aufnehmen von Flüssigkeiten, den Schritt enthaltend In Kontakt bringen der Flüssigkeit mit mindestens einem Sorbens enthaltend ein poröses metallorganisches Gerüstmaterial, wobei das Gerüstmaterial die Flüssigkeit aufnimmt und mindestens eine an mindestens ein Metallion koordinativ gebundene, mindestens zweizähnige organische Verbindung enthält, wobei die Flüssigkeit Wasser enthält, **dadurch gekennzeichnet, dass** sich das Gerüstmaterial in einem für das Gerüstmaterial geschlossenen Behälter befindet, der jedoch für die zu absorbierende Flüssigkeit durchlässig ist.

2. Verfahren nach Anspruch 1, wobei das poröse metallorganische Gerüstmaterial mindestens eine der folgenden Eigenschaften aufweist:
a) spezifische Oberfläche > 5 m²/g (nach DIN 66131);
b) Porengröße des kristallinen MOF von 0,2 nm bis 30 nm;
c) Mindestens die Hälfte des Porenvolumens wird von Poren mit einem Porendurchmesser bis 1000 nm gebildet.

3. Verfahren nach Anspruch 1 oder 2, wobei das mindestens eine Metallion Cu darstellt.

4. Verfahren nach einem der Ansprüche 1 bis 3, wobei das poröse metallorganische Gerüstmaterial Zn oder Cu als Metallion und die mindestens zweizähnige organische Verbindung Isophthalsäure, 2,6-Naphthalindicarbonsäure, Terephthalsäure oder 1,3,5-Benzoltricarbonsäure ist.

5. Verfahren nach einem der Ansprüche 1 bis 4, wobei dem Inkontaktbringen ein Schritt vorausgeht, bei dem das poröse metallorganische Gerüstmaterial auf elektrochemischem Wege hergestellt wird.

6. Verwendung eines porösen metallorganischen Gerüstmaterials, welches mindestens eine an mindestens ein Metallion koordinativ gebundene, mindestens zweizähnige organische Verbindung enthält, zum absorptiven Entfernen von Wasser, wobei sich das Gerüstmaterial in einem für das Gerüstmaterial geschlossenen Behälter befindet, der jedoch für Wasser durchlässig ist.

## Claims

1. A method for the absorption of liquids, which comprises the step
bringing the liquid into contact with at least one sorbent comprising a porous metal-organic framework, the framework taking up the liquid and comprising at least one at least bidentate organic compound having a coordinate bond to at least one metal ion, the liquid comprising water, wherein the framework is present in a container which is closed with respect to the framework but which is permeable to the liquid to be absorbed.

2. The method according to claim 1, the porous metal-organic framework having at least one of the following properties:
a) specific surface area > 5 m²/g (according to DIN 66131);
b) pore size of the crystalline MOF from 0.2 nm to 30 nm;
c) at least half the pore volume is formed by pores having a pore diameter of up to 1000 nm.

3. The method according to claim 1 or 2, the at least one metal ion being Cu.

4. The method according to any of claims 1 to 3, the porous metal-organic framework comprising Zn or Cu as the metal ion and the at least bidentate organic compound being isophthalic acid, 2,6-naphthalenedicarboxylic acid, terephthalic acid or 1,3,5-benzenetricarboxylic acid.

5. The method according to any of claims 1 to 4, the contacting step being preceded by a step in which the porous metal-organic framework is prepared by an electrochemical method.

6. The use of a porous metal-organic framework which comprises at least one at least bidentate organic compound having a coordinate bond to at least one metal ion for the removal of water by absorption, the framework being present in a container which is closed with respect to the framework but which is permeable to water.

## Revendications

1. Procédé de recueillement par absorption de liquides, comprenant
la mise en contact du liquide avec au moins un sorbant contenant un matériau de squelette métallo-organique poreux, le matériau de squelette recueillant le liquide et contenant au moins un composé organique au moins bidentate relié coordinativement à au moins un ion métallique, le liquide contenant de l'eau,
**caractérisé en ce que**
le matériau de squelette se trouve dans un récipient fermé au matériau de squelette, qui est toutefois perméable au liquide à absorber.

2. Procédé selon la revendication 1, dans lequel le matériau de squelette métallo-organique poreux présente au moins une des propriétés suivantes :
a) une surface spécifique > 5 m²/g (selon DIN 66131) ;
b) une taille de pore du MOF cristallin de 0,2 nm à 30 nm ;
c) au moins la moitié du volume poreux est formée de pores ayant un diamètre de pore inférieur ou égal à 1 000 nm.

3. Procédé selon la revendication 1 ou 2, dans lequel l'au moins un ion métallique est Cu.

4. Procédé selon l'une quelconque des revendications 1 à 3, dans lequel le matériau de squelette métallo-organique poreux est Zn ou Cu en tant qu'ion métallique et le composé organique au moins bidentate est l'acide isophtalique, l'acide 2,6-naphtalènedicarboxylique, l'acide téréphtalènedicarboxylique ou l'acide 1,3,5-benzènetricarboxylique.

5. Procédé selon l'une quelconque des revendications 1 à 4, dans lequel la mise en contact est précédée d'une étape dans laquelle le matériau de squelette métallo-organique poreux est fabriqué par voie électrochimique.

6. Utilisation d'un matériau de squelette métallo-organique poreux qui contient au moins un composé organique au moins bidentate relié coordinativement à au moins un ion métallique, pour l'élimination d'eau par absorption, le matériau de squelette se trouvant dans un récipient fermé au matériau de squelette, qui est toutefois perméable à l'eau.
